# EUROPÄISCHE PATENTSCHRIFT

(11) **EP 0 501 128 B1**
(45) Veröffentlichungstag und Bekanntmachung des Hinweises auf die Patenterteilung: **10.05.1995**
(21) Anmeldenummer: 92100792.8
(22) Anmeldetag: 18.01.1992
(51) Int. Cl.: B60J 1/02

(54) **Halteelement zum vertikalen Positionieren einer Fensterscheibe**
Supporting element for vertical positioning of a window panel
Elément de support pour positionner verticalement une vitre de fenêtre

(30) Priorität: 19.02.1991 DE 4105023
(43) Veröffentlichungstag der Anmeldung: 02.09.1992
(73) Patentinhaber: A. Raymond GmbH & Co. KG, D-79539 Lörrach (DE)
(72) Erfinder: Lesser, Hans-Jürgen, Dr. Ing., W-7888 Rheinfelden (DE); Schweizer, Karl-Heinz, W-7850 Lörrach-Brombach (DE)
(74) Vertreter: Kirchgaesser, Johannes, Dipl.-Ing.

(56) Entgegenhaltungen:
- EP-A- 0 230 837
- EP-A- 0 323 093

## Beschreibung

Die Erfindung bezieht sich auf ein Halteelement zum vertikalen Positionieren einer im Rahmen eines Kraftfahrzeugs einklebbaren Fensterscheibe gemäß dem Oberbegriff des Anspruchs 1.

Aufklebbare Fensterscheiben, wie z.B. Windschutzscheiben, werden üblicherweise automatisch mit einem Freiarm-Roboter eingesetzt. Die Scheiben müssen dabei mit einem konstanten Abstand zum Fensterrahmen plaziert und bis zum Abbinden des Klebers durch Halteelemente positioniert werden. Hierbei werden im Kfz.-Bau neben den Halteelementen mit von Hand einstellbaren Stützflächen in zunehmendem Maße auch solche mit selbsttätiger Einstellung der Stützelemente auf die jeweilige Höhe der Scheibenunterkante verwendet.

Die Erfindung geht aus von einem durch die EP-A-0 230 837 bekannten Halteelement, bei welchem in dichten Abständen übereinander angeordnete Stützbalken über elastisch zusammendrückbare Federbeine einstückig mit dem Halteteil verbunden sind. Hierbei ruht die Scheibenkante nach der Plazierung der Scheibe auf dem jeweils darunterbefindlichen Stützbalken, während die darüberliegenden Stützbalken von der Scheibe weggedrückt werden.

Beim Plazieren der Scheibe durch den Roboter ergeben sich jedoch häufig Toleranzabweichungen zum Fensterrahmen, welche über eine Nachjustierung der bereits an die Klebemasse angedrückten Scheibe ausgeglichen werden müssen. Dies erfordert eine nachträgliche Verschiebung der Scheibe in der Einbauebene, wobei die Scheibenoberkante auf ein bestimmtes vorgegebenes Maß zum oberen Querrahmen ausgerichtet werden muß.

Bei dem bekannten Halteelement kann eine Ausgleichsbewegung nach unten dadurch ermöglicht werden, daß die Balken, die dieser Ausgleichsbewegung im Wege sind, nachträglich von Hand eingedrückt werden. Beim Ausrichten der Scheibe nach oben hingegen kann der letzte von der Scheibenkante eingedrückte Stützbalken aufgrund der Rückstellkraft der Federbeine wieder nach vorne federn und so die Scheibe in der neueingestellten Höhe unterstützen.

Dieses Halteelement weist jedoch verschiedene Nachteile auf, die die Kraftfahrzeugkonstrukteure offenbar davon abgehalten haben, dieses Prinzip zum vorübergehenden Positionieren von Windschutzscheiben generell einzusetzen. Zum einen ergibt die aus baulichen Gründen erforderliche Dicke der Stützbalken eine zu grobe Abstufung zwischen den einzelnen Stützflächen und zum anderen ist zwischen den einzelnen Stützbalken aus entformungstechnischen Gründen ein gewisser Abstand erforderlich, welcher beim Einsatz des Halteelements von der abzustützenden Scheibe erst weggedrückt werden muß, bevor der Abstützungseffekt erreicht ist. Je höher die untere Scheibenkante zu positionieren ist, umso mehr Stützbalken müssen aufeinandergedrückt werden und umso tiefer rutscht die Scheibe nach unten, bis alle Balken fest aufeinanderliegen. Damit ist die Positionierung für die Praxis zu ungenau. Schließlich läßt sich dieses Halteelement nicht in einer einfachen zweigeteilten Gießform abspritzen, sondern erfordert noch einen separaten Entformungsschieber, um den Zwischenraum zwischen den seitlich abgeknickten Federbeinen entformen zu können, was die Herstellungskosten zwangsläufig in die Höhe treibt.

Im Hinblick auf die an das Halteelement gestellten Anforderungen und die Tatsache, daß die Stützfunktion nur vorübergehend benötigt wird, bis der Klebevorgang beendet ist, wird die Aufgabe der Erfindung darin gesehen, das eingangs beschriebene Halteelement so zu gestalten, daß eine feinere Abstufung zwischen den einzelnen Stützflächen erreicht und ein Nachgeben der Stützflächen bei Belastung durch die Scheibe weitgehend vermieden wird. Außerdem sollen die Herstellungskosten möglichst niedrig gehalten werden.

Diese Aufgabe wird durch die in Anspruch 1 angegebene Erfindung gelöst, wobei in den Unteransprüchen noch weitere für die Erfindung förderliche Gestaltungsmerkmale angegeben sind, welche bei der nachfolgenden Beschreibung von Ausführungsbeispielen der Erfindung im einzelnen dargelegt werden. Es zeigt
- Fig. 1: ein Halteelement mit 5 Stützstufen in Vorderansicht,
- Fig. 2: das Halteelement im Schnitt durch die oberste Stützstufe gemäß Linie II - II in Figur 1,
- Fig. 3: ein im Fensterrahmen eingebautes Halteelement mit Scheibe vor dem Andrücken,
- Fig. 4: das eingebaute Halteelement im Schnitt gemäß Linie IV - IV in Figur 1 nach dem Andrücken der Scheibe,
- Fig. 5: die gleiche Einbausituation nach dem Ausrichten der Scheibe in Pfeilrichtung,
- Fig. 6: ein weiteres Ausführungsbeispiel des Halteelements in Vorderansicht,
- Fig. 7: einen Schnitt durch die oberste Stützstufe gemäß Linie VII - VII in Fig. 6,
- Fig. 8: das im Fensterrahmen eingebaute Halteelement im Schnitt gemäß Linie VIII - VIII in Fig. 6 mit Scheibe vor dem Andrücken,
- Fig. 9: das eingebaute Halteelement im Schnitt gemäß Linie IX - IX in Fig. 6 nach dem Andrücken der Scheibe,
- Fig. 10: die gleiche Einbausituation nach dem Ausrichten der Scheibe in Pfeilrichtung,
- Fig. 11: ein weiteres Ausführungsbeispiel des Halteelements in Vorderansicht,
- Fig. 12: einen Schnitt durch die unterste Stützstufe gemäß Linie XII - XII in Fig. 11,
- Fig. 13: einen Schnitt durch eine andere Stützstufe gemäß Linie XIII - XIII in Fig. 11 mit angespritztem Stützstift und
- Fig. 14: einen Schnitt durch die gleiche Stützstufe mit eingeschlagenem Stützstift im Anlieferungszustand.

Das in den Figuren dargestellte Halteelement dient zum vertikalen Positionieren von im Rahmen eines Kraftfahrzeuges einklebbaren Glasscheiben, wie Windschutzscheiben oder Heckscheiben, wobei die Haltefunktion nur solange benötigt wird, bis die Klebeverbindung zwischen Scheibe und Fensterrahmen hergestellt ist.

Das Halteelement besteht zu diesem Zweck aus einem im unteren Querrahmen 11 einsetzbaren, im wesentlichen rechteckigen Halteteil 1 und einer Anzahl von Stützstufen 2 mit in gleichen Abständen "s" ansteigenden Stützflächen 3. Die Stützstufen 2 sind hierbei in Richtung parallel zum Querrahmen 11, d.h. in Längsrichtung des Halteteils 1, nebeneinander angeordnet und unterhalb der Stützflächen 3 über Verbindungsstege 4 am Halteteil 1 schwenkbar angeformt.

Die Stützstufen 2 sind im vorliegenden Ausführungsbeispiel aus einem aus dem Halteteil 1 hervorragenden Auflageschenkel 5 und einem Stützschenkel 6 gebildet, welcher am vorderen Ende des Auflageschenkels 5 angeformt und von dort schräg bis zum Verbindungssteg 4 heruntergeführt ist. Den Stützstufen 2 sind entsprechend große Nischen 7 im Halteteil 1 zugeordnet, in welche die Stützstufen 2 beim Andrücken einer Scheibe 13 voll versenkbar sind. Es werden jedoch nur die Stützstufen 2 eingedrückt, welche nach der Plazierung der Scheibe 13 im Querrahmen 11 hinter dem unteren Scheibenrand 15 liegen. Die anderen Stützstufen 2 verbleiben in ihrer Ausgangslage, wobei die jeweils oberste der verbliebenen Stützstufen 2 in ihrer Stützfunktion zum Tragen kommt.

Die Stützstufen 2 besitzen jeweils am unteren Ende des Stützschenkels 6 im Abstand "a" neben bzw. vor dem Verbindungssteg 4 eine nach unten gerichtete Anschlagfläche 8. Ebenso ist am Boden 9 der Nische 7 im gleichen Abstand "a" ein bis dicht unter die Anschlagfläche 8 hochgeführter Nocken 10 angeformt, auf welchem sich die Anschlagfläche 8 im ausgeschwenkten und belasteten Zustand der Stützstufe 2 abstützt, so daß die jeweils zum Tragen kommende Stützstufe 2 in einer stabilen Stützposition gehalten wird.

Um das aus Kunststoff herzustellende Halteelement gießtechnisch leichter entformen zu können, sind die Stütznocken 10 jeweils in der Mitte des zugehörigen Stützschenkels 6 angeordnet und erstrecken sich über etwa die halbe Breite der Stützschenkel 6. Beiderseits der Stütznocken 10 befinden sich dann die Verbindungsstege 4, die die Stützschenkel 6 mit dem Halteteil 1 schwenkbar verbinden, wobei diese Verbindungsstege 4 von den Stütznocken 10 im Abstand "a" nach innen versetzt im Boden 9 der Nischen 7 angeformt sind.

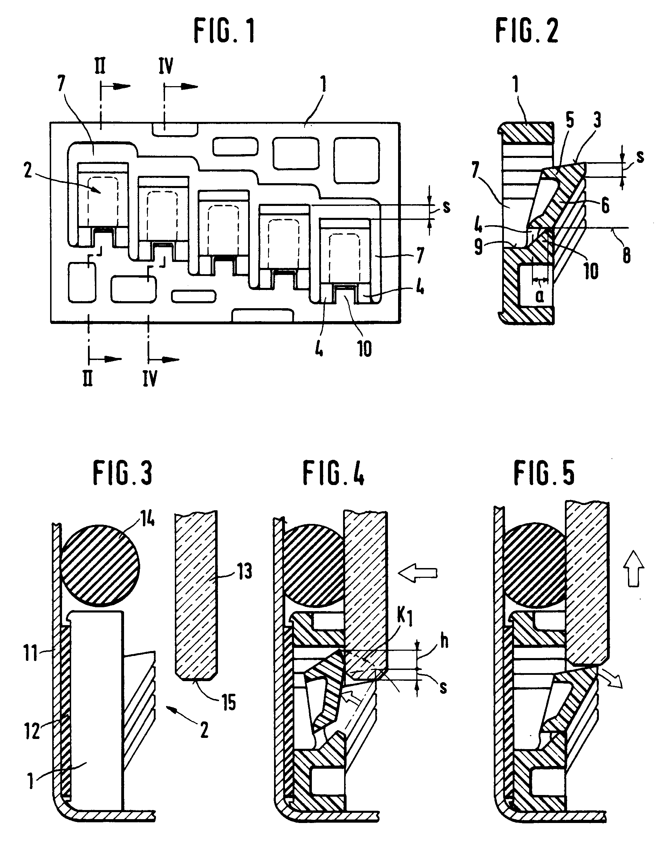

Die Funktion des Halteelements ist in den Figuren 3 bis 5 anschaulich dargestellt.

Mindestens zwei Halteelemente werden im unteren Querrahmen 11 eines nicht näher dargestellten, üblichen Fensterrahmens eingesetzt und mittels doppelseitig wirkender Klebebänder 12 befestigt. Die Stützstufen 2 sind hierbei alle in der ausgeschwenkten Ausgangslage. Oberhalb des Halteteils 1 befindet sich der zum Einkleben einer Windschutzscheibe 13 vorgesehene Klebestreifen 14. Die Windschutzscheibe 13 wird von einem nicht dargestellten Freiarm-Roboter herangefahren und genau vor dem Fensterrahmen plaziert.

Figur 4 zeigt die Montagesituation nach dem Andrücken der Scheibe 13, wobei die untere Scheibenkante 15 auf der drittuntersten Stützstufe 2 abgestützt und von dieser in der zum Ankleben vorgesehenen Position gehalten wird. Die im Schnitt IV - IV dargestellte Stützstufe 2 wurde dabei ebenso wie die davorliegende unsichtbare oberste Stützstufe von der Scheibe 13 nach innen in die Nische 7 weggedrückt.

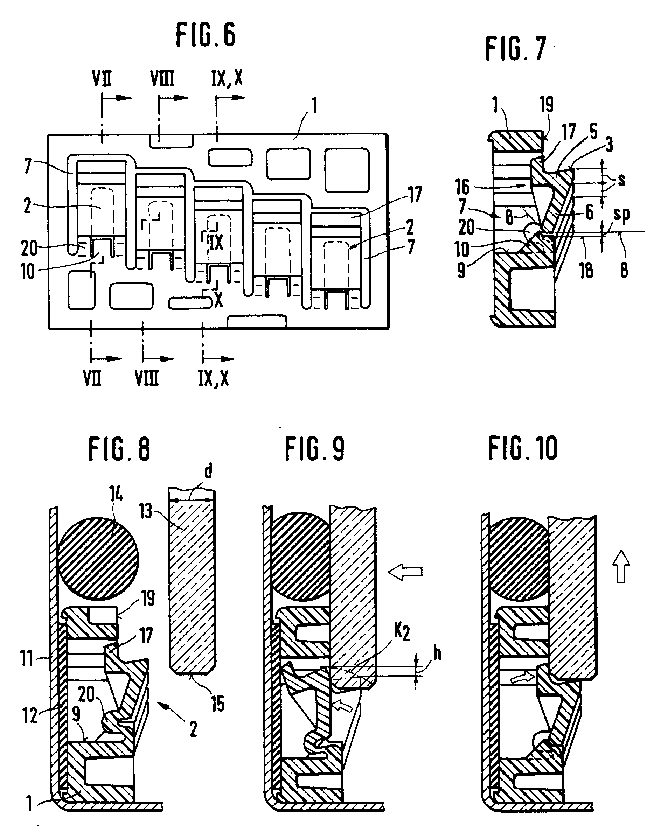

Falls sich beim Andrücken der Scheibe 13 herausstellt, daß diese zum Erreichen ihrer korrekten Position im Fensterrahmen noch etwas nach oben ausgerichtet werden muß (Fig. 5), so wird die schraffiert dargestellte Stützstufe 2 aufgrund der Rückstellkraft der elastisch verbogenen Verbindungsstege 4 selbsttätig wieder in ihre Ausgangslage unter die Scheibenkante 15 vorschwenken bzw. zurückfedern, sobald die Scheibenkante 15 um die Stufenhöhe "s" zuzüglich der Höhe "h" des beim Einschwenken der Stützstufe 2 beschriebenen Kreisbogens "K1" nach oben bewegt worden ist. Muß die Scheibe 13 dagegen beim Ausrichten nach unten verschoben werden, so brauchen lediglich die tragenden Stützstufen 2 nach innen in die Nische 7 gedrückt zu werden und die Scheibe 13 kann aufgrund ihres Eigengewichtes auf die nächst niedrigeren Stützstufen 2 abgleiten.

Bei dem Ausführungsbeispiel nach Fig. 6 - 10 besitzt das Halteelement ebenso fünf im Halteteil 1 schwenkbar angeformte Stützstufen 2 wie beim vorbeschriebenen Beispiel. Hierbei sind jedoch am hinteren Ende 16 der Auflageschenkel 5 jeweils nach oben abgewinkelte Anschlagnasen 17 vorgesehen, welche im Anlieferungszustand in der Nische 7 versenkt sind und bei aufliegender Fensterscheibe 13 an deren Innenseite anliegen. Außerdem sind die Stützstufen 2 über S-förmige Verbindungsstege 20 mit dem Halteteil 1 schwenkbar verbunden und die Anformstellen der Verbindungsstege 20 aus den Nischen 7 heraus vor die Auflagefläche 19 des Halteteils 1 verlegt (Fig. 8), wodurch der Kreisbogen "K2" des Auflageschenkels 5 beim Einschwenken der Stützstufe 2 wesentlich flacher verläuft (Fig. 9) als bei Figur 4.

Die Stütznocken 10 sind mit einer Stützfläche 18 versehen, welche aus der Auflagefläche 19 des Halteteils 1 um mindestens 1/3 der Fensterdicke "d" vorragt. Dadurch wird sichergestellt, daß die tragende Stützstufe 2 über den Stützschenkel 6 in Verlängerung der Scheibenebene abgestützt wird, ohne die Verbindungsstege 20 zu belasten.

Hierbei ist jedoch zu bedenken, daß die Fensterrahmen 11 für die Windschutzscheiben und Heckscheiben von Kraftfahrzeugen in der Regel schräg angeordnet sind. Daher ist es im Hinblick auf die flexible Ausbildung der Verbindungsstege 20 und dem zu erwartenden Auftreten von Querkräften am unteren Stützschenkel 6 ratsam, den Teil der Stützfläche 18, der in der Nische 7 liegt, in einem die Schräglage ausgleichenden stumpfen Winkel zum vorragenden Teil der Stützfläche 18 des Stütznockens 10 ansteigen zu lassen. Selbstverständlich muß dann auch die Anschlagfläche 8 des Stützschenkels 6 in gleichem Maße abgewinkelt sein (Fig. 7).

Figur 10 zeigt die Einbausituation nach dem Ausrichten der Scheibe 13 nach oben, wobei genau wie bei der bereits in Fig. 5 behandelten Einbausituation die zuvor eingedrückte Stützstufe 2 durch die Rückstellkraft des flexiblen Verbindungssteges 20 unter der Scheibenkante 15 nach außen zurückgefedert ist. Beim Abstützen der Scheibenkante 15 auf dem Auflageschenkel 5 wurde der herstellungsbedingte Spalt "sp" zwischen den beiden Stützflächen 8 und 18 (Fig. 7) unter dem Gewicht der Scheibe weggedrückt, so daß die beiden Stützflächen bündig aufeinanderliegen und die Stützstufe 2 nunmehr in der Lage ist, die Scheibe bis zum Abbinden des Klebestreifens 14 in einer stabilen Stützposition zu fixieren.

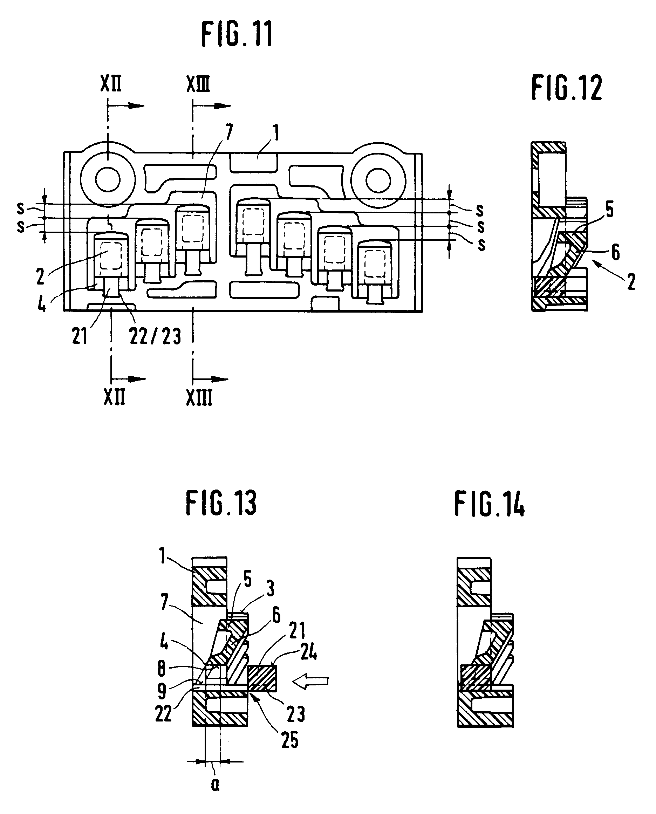

Bei dem Ausführungsbeispiel nach Fig. 11 - 14 ist das Halteelement mit 7 Stützstufen 2 ausgestattet, welche im Prinzip gleich ausgebildet und am Halteteil 1 schwenkbar angeformt sind wie die Stützstufen 2 beim ersten Ausführungsbeispiel. Der wesentliche Unterschied liegt in der spielfreien Abstützung der Stützstufen 2 im ausgeschwenkten Zustand.

Anstelle des Stütznockens 10 ist hierbei ein Stützstift 21 vorgesehen, der im Boden 9 der Nischen 7 in einer sogenannten Schwalbenschwanzverbindung verschieblich geführt ist. Das heißt, daß im Boden 9 eine schwalbenschwanzförmige Führungsrille 22 eingelassen und der Stift 21 mit einem entsprechend geformten Führungsfuß 23 versehen ist.

Wie aus Fig. 13 ersichtlich, wird der Stützstift in der Gießform zunächst auf der Seite der Stützstufen 2 am Ende der Führungsrille 22 angeformt und ist mit der Führungsrille 22 über abreißbare Verbindungsstege 25 verbunden. Nach dem Erkalten des Formteils wird dann der Stützstift in Richtung des Pfeiles in seine Gebrauchsposition geschlagen, wobei die Stützfläche 24 des Stützstiftes 21 "spielfrei" unter die Anschlagfläche 8 der Stützstufe 2 gleitet. Die Stützstufen 2 sind damit so abgestützt, daß diese bei Auflage einer Fensterscheibe ohne elastisches Nachgeben in ihrer Stützposition verharren und nur die zu hoch angesiedelten Stützstufen 2 elastisch in die Nischen 7 weggedrückt werden.

## Patentansprüche

1. Halteelement zum vertikalen Positionieren einer im Rahmen (11) eines Kraftfahrzeuges einklebbaren Fensterscheibe (13), bestehend aus einem im unteren Querrahmen (11) einsetzbaren Halteteil (1) und einer Reihe von mit diesem einstückig verbundenen, elastisch eindrückbaren Stützstufen (2) mit in gleichmäßigen Abständen übereinander angeordneten Stützflächen (3) zur Abstützung des unteren Scheibenrandes,
**dadurch gekennzeichnet,** daß die Stützstufen (2) *mit in gleichen Abständen (s) ansteigenden Stützflächen (3)* in Richtung parallel zum Querrahmen (11) nebeneinander angeordnet und unterhalb der Stützflächen (3) über *elastisch verbiegbare* Verbindungsstege (4, 20) am Halteteil (1) *derart* schwenkbar angeformt sind, *daß sie selbsttätig in ihre Ausgangslage unter die untere Kante (15) der Fensterscheibe (13) zurückfedern*, wobei die Stützstufen (2) auf der den Verbindungsstegen (4) zugewandten unteren Seite in einem Abstand (a) zu den Verbindungsstegen (4, 20) Anschlagflächen (8) aufweisen, die mit im Schwenkbereich der Stützstufen (2) angeordneten, am Halteteil (1) angeformten Stütznocken (10) so zusammenwirken, daß eine stabile Stützposition der Stützstufen (2) erreicht ist.

2. Halteelement nach Anspruch 1, dadurch gekennzeichnet, daß die Stutzstufen (2) aus einem aus dem Halteteil (1) etwa rechtwinklig hervorragenden Auflageschenkel (5) und einem vom Halteteil (1) abgewandt gelegenen Ende dieses Schenkels (5) schräg zum Verbindungssteg (4, 20) verlaufenden Stützschenkel (6) gebildet sind, wobei Auflageschenkel (5) und Stützschenkel (6) bei eingedrückter Stützstufe (2) voll in entsprechenden Nischen (7) des Halteteils (1) eintauchen.

3. Halteteil nach Anspruch 2, dadurch gekennzeichnet, daß an dem Auflageschenkel (5) abgewandten Ende des Stützschenkels (6) im Abstand (a) neben dem Verbindungssteg (4, 20) eine zum Stützschenkel (6) schräg angeordnete Anschlagfläche (8) vorgesehen ist, welche sich im ausgeschwenkten Zustand der Stützstufe (2) auf einem im gleichen Abstand (a) am Boden (9) der Nische (7) angeformten, bis dicht unter die Anschlagfläche (8) hochgeführten Nocken (10) abstützt.

4. Halteteil nach Anspruch 3, dadurch gekennzeichnet, daß die Stütznocken (10) jeweils in der Mitte der Stützschenkel (6) angeordnet sind und sich über etwa die halbe Breite der Stützschenkel (6) erstrecken, während die Verbindungsstege (4, 20) beiderseits der Stütznocken (10) im Abstand (a) nach innen versetzt am Boden (9) der Nischen (7) angeformt sind.

5. Halteelement nach einem der Ansprüche 2 bis 4, dadurch gekennzeichnet, daß an dem Halteteil (1) zugewandten Ende (16) des Auflageschenkels (5) eine abgewinkelte Anschlagnase (17) angeformt ist, welche bei aufliegender Fensterscheibe (13) an deren Innenseite anliegt.

6. Halteelement nach Anspruch 5, dadurch gekennzeichnet, daß der Stütznocken (10) eine Stützfläche (18) aufweist, welche aus der Auflagefläche (19) des Halteteils (1) für die Fensterscheibe (13) um mindestens 1/3 der Fensterdicke (d) vorragt, und daß die Verbindungsstege (20) beiderseits dieser vorragenden Stützfläche (18) am Boden (9) der Nische (7) angeformt und S-förmig ausgebildet sind.

7. Halteelement nach Anspruch 6, dadurch gekennzeichnet, daß der aus der Auflagefläche (19) vorragende Teil der Stützfläche (18) mit dem restlichen Teil der Stützfläche (18) des Stütznockens (10) einen stumpfen Winkel bildet und die Anschlagfläche (8) der Stützschenkel (6) im gleichen Maße abgewinkelt ist.

8. Halteteil nach Anspruch 2, dadurch gekennzeichnet, daß am dem Auflageschenkel (5) abgewandten Ende des Stützschenkels (6) im Abstand (a) neben dem Verbindungssteg (4, 20) eine zum Stützschenkel (6) schräg angeordnete Anschlagfläche (8) vorgesehen ist, welche sich im ausgeschwenkten Zustand der Stützstufe (2) auf einem Stift (21) spielfrei abstützt, welcher zwischen den Verbindungsstegen (4,20) im Boden (9) der Nischen (7) in einer sogenannten Schwalbenschwanzverbindung (22/23) verschieblich geführt und zur Anschlagfläche (8) im gleichen Abstand (a) mit einer entsprechenden Stützfläche (24) versehen ist.

9. Halteteil nach Anspruch 9, dadurch gekennzeichnet, daß der Stift (21) am Ende der schwalbenschwanzförmigen Führungsrille (22) mit seinem Führungsfuß (23) über abreißbare Verbindungsstege (25) einstückig angeformt ist und nach dem Erkalten des Formteils in seine Gebrauchsposition unter der Anschlagfläche (8) gedrückt wird.

## Claims

1. A holding element for vertically positioning a window pane (13) which can be glued in the frame (11) of a motor vehicle, comprising a holding portion (1) which can be fitted in the lower transverse frame (11) and a row of support steps (2) which are integrally connected to the holding portion and which can be elastically pressed in and which have support surfaces (3) arranged at uniform spacings one above the other for supporting the lower edge of the pane, characterised in that the support steps (2) with support surfaces (3) which rise at equal spacings (s) are arranged side-by-side in a direction parallel to the transverse frame (11) and are pivotably formed on the holding portion (1) beneath the support surfaces (3) by way of elastically bendable connecting limbs (4, 20) in such a way that they automatically spring back into their starting position under the lower edge (15) of the window pane (13), wherein on the lower side which is towards the connecting limbs (4) the support steps (2) have at a spacing (a) relative to the connecting limbs (4, 20) abutment surfaces (8) which so co-operate with support projections (10) formed on the holding portion (1) and arranged in the region of pivotal movement of the support steps (2) that a stable support position of the support steps (2) is reached.

2. A holding element according to claim 1 characterised in that the support steps are formed from a contact leg (5) which projects substantially at a right angle out of the holding portion (1) and a support leg (6) extending inclinedly relative to the connecting limb (4, 20) from the end of said leg (5) which is remote from the holding portion (1), wherein when the support step (2) is pressed in the contact leg (5) and the support leg (6) engage fully in corresponding recesses (7) in the holding portion (1).

3. A holding element according to claim 2 characterised in that provided at the end of the support leg (6) which is remote from the support leg (5) at a spacing (a) beside the connecting limb (4, 20) is an abutment surface (8) which is arranged inclinedly relatively to the support leg (6) and which in the outwardly pivoted condition of the support step (2) is supported on a projection (10) which is formed at the same spacing (a) at the bottom (9) of the recess (7) and which is extended upwardly to closely beneath the abutment surface (8).

4. A holding element according to claim 3 characterised in that the support projections (10) are respectively arranged in the middle of the support legs (6) and extend over approximately half the width of the support legs (6) while the connecting limbs (4, 20) are formed on both sides of the support projections (10) displaced inwardly at the spacing (a) on the bottom (9) of the recesses (7).

5. A holding element according to one of claims 2 to 4 characterised in that formed on the end (16) of the contact limb (5) which is towards the holding portion (1) is an angled abutment nose (17) which, when the window pane (13) is in contact, bears against the inside thereof.

6. A holding element according to claim 5 characterised in that the support projection (10) has a support surface (18) which projects out of the contact surface (19) of the holding portion (1) for the window pane (13) by at least one-third of the window thickness (d), and that the connecting limbs (20) are formed on both sides of said projecting support surface (18) on the bottom (10) of the recess (7) and are of an S-shaped configuration.

7. A holding element according to claim 6 characterised in that the part of the support surface (18) which projects out of the contact surface (19) forms an obtuse angle with the remaining part of the support surface (18) of the ,support projection (10) and the abutment surface (8) of the support legs (6) is angled to the same degree.

8. A holding element according to claim 2 characterised in that provided at the end of the support leg (6) which is remote from the contact leg (5) at a spacing (a) beside the connecting limb (4, 20) is an abutment surface (8) which is arranged inclinedly relative to the support leg (6) and which in the outwardly pivoted condition of the support step (2) is supported in a play-free manner on a pin (21) which is displaceably guided between the connecting limbs (4, 20) in the bottom (9) of the recesses (7) in a so-called dovetail connection (22, 23) and in relation to the abutment surface (8) is provided at the same spacing (a) with a corresponding support surface (24).

9. A holding element according to claim 8 characterised in that the pin (21) is formed integrally at the end of the dovetail-shaped guide groove (22) with its guide base (23) by way of connecting limbs (25) which can be torn off, and after the moulding has cooled the pin is pressed into its position of use under the abutment surface (8).

## Revendications

1. Organe de retenue pour le positionnement dans le plan vertical d'une vitre à monter par collage (13) sans le cadre (11) d'un véhicule, se composant d'un organe de retenue (1) à placer sur la partie transversale inférieure du cadre (11) et d'une série de gradins d'appui (2) réalisés solidaire de cet organe, pouvant être positionnés par pression par cédage élastique, comportant des surfaces d'appui (3) respectivement disposées les unes au-dessus des autres à intervalles réguliers et qui servent à supporter le bord inférieur de la vitre, **se caractérisant par le fait** que les gradins d'appui (2) sont disposés l'un a côté de l'autre, parallèlement a la partie transversale du cadre, leur surface d'appui respective (3) se trouvant à chaque fois à un niveau plus élevé dans une proportion identique "s", et sont réalisés solidaires par moulage de l'organe de retenue (1), avec la possibilité de basculer, par l'intermédiaire de barrettes entretoises de liaison (4, 20) pouvant se déformer élastiquement, dans des conditions telles qu'ils reprennent automatiquement, par retour élastique, leur position initiale sous le bord inférieur (15) de la vitre (13), les gradins d'appui (2) comportant en l'occurrence, au niveau de leur partie inférieure faisant face aux barrettes entretoise de liaison (4) et à une distance "a" par rapport aux barrettes entretoises (4, 20), des surfaces de butée (8) qui exercent, conjointement aux ergots d'appui (10), réalisés solidaires par moulage de l'organe de retenue (1) et disposés dans la zone de basculement des gradins d'appui (2) une action telle qu'il est possible de conférer aux gradins d'appui (2) une assise d'appui stable.

2. Organe de retenue suivant la revendication (1), se caractérisant par le fait que les gradins d'appui (2) sont constitués par une patte d'assise (5) qui fait saillie de l'organe de retenue (1) suivant une disposition sensiblement à angle droit et par une patte d'appui (6) s'étendant obliquement, de l'extrémité de cette patte (5) opposée à l'organe de retenue (1) en direction de la barrette entretoise (4, 20), la patte d'assise (5) et la patte d'appui (6) venant en l'occurrence intégralement s'encastrer dans les alvéoles (7) ménagées en correspondance dans l'organe de retenue (1) lorsque le gradin (2) est soumis à l'action d'une pression d'enfoncement.

3. Organe de retenue suivant la revendication 2, se caractérisant par le fait qu'il est prévu, au niveau de l'extrémité de la patte d'appui (6) opposée a la patte d'assise (5), a une distance "a" à côté de la barrette entretoise (4, 20), une surface de butée (8) qui est orientée obliquement par rapport à la patte d'appui (6) qui vient s'appuyer, lorsque le gradin d'appui (2) se trouve repoussé vers l'extérieur, sur un ergot (10) réalisé, suivant le même intervalle "a", solidaire du fond (9) de l'alvéole (7), qui remonte sur une hauteur se situant juste en-dessous de la partie inférieure de la surface de butée (8).

4. Organe de retenue suivant la revendication 3, se caractérisant par le fait que les ergots d'appui (10) sont respectivement disposés au centre de la patte d'appui (6) et que leur longueur correspond sensiblement à la moitié de la largeur de la patte d'appui (6), cependant que les barrettes entretoises de liaison (4, 20) sont, de part et d'autre des ergots d'appui (10), réalisées solidaires par moulage du fond (9) des alvéoles (7) et en l'occurrence décalées vers l'intérieur dans la proportion de la distance "a".

5. Organe de retenue suivant une des revendications 2 à 4, se caractérisant par le fait que l'extrémité (16) de la patte d'assise (5) faisant face à l'organe de retenue (1) comporte, venu de moulage, un talon de butée replié en angle droit (17) qui, lorsque la vitre (13) est en appui, s'applique contre sa face intérieure.

6. Organe de retenue suivant la revendication 5, se caractérisant par le fait que l'ergot d'appui (10) comporte une surface d'appui (18), qui fait saillie par rapport à la surface d'assise (19) de l'organe de retenue (1) de la vitre (13) dans une proportion correspondant à au moins 1/3 de l'épaisseur "d" de la vitre et par le fait que les barrettes entretoises (20) sont réalisées solidaires par moulage du fond (9) de l'alvéole (7) de part et d'autre de cette face d'appui formant salle (18) et ont en l'occurrence une configuration en forme de S.

7. Organe de retenue suivant la revendication 6, se caractérisant par le fait que la partie de la surface d'appui (18) formant salle par rapport à la surface d'assise (19) forme, avec la partie restante de la surface d'appui (18) de l'ergot d'appui (10) un angle obtus et par le fait que la surface de butée (8) de la patte d'appui (6) est pliée dans une proportion identique.

8. Organe de retenue suivant la revendication 2, se caractérisant par le fait qu'il est prévu, sur l'extrémité opposée à la patte d'assise (5) de la patte d'appui (6), dans l'intervalle "a", à côté de la barrette entretoise de liaison (4, 20), une surface de butée (8) orientée obliquement par rapport à la patte d'appui (6) qui, lorsque le gradin d'appui est en position de basculement vers l'extérieur, prend appui sans aucun jeu sur une cheville (21), qui est logée, avec la possibilité de coulisser, entre les barrettes entretoises (4, 20) dans le fond (9) des alvéoles (7), dans un assemblage dit en queue d'aronde (22/23) et qui est munie, vers la surface de butée (8), avec un même intervalle "a", d'une surface d'appui correspondante (24).

9. Organe de retenue suivant la revendication 8, se caractérisant par le fait que la cheville (21) est rendue solidaire suivant une disposition monobloc, à l'extrémité de la gorge de guidage en queue d'aronde (22), de sa patte de guidage (23) par l'intermédiaire de barrettes de liaison (25) et est amenée par pression dans sa position d'utilisation sous la surface de butée (8) une fois la pièce de forme refroidie.
